Europäisches Patentamt

European Patent Office

Office européen des brevets

(11) Numéro de publication: **0 063 530**
**B1**

# FASCICULE DE BREVET EUROPEEN

(45) Date de publication du fascicule du brevet:
**06.02.85**

(51) Int. Cl.⁴: **F 24 D 19/10**, F 24 H 9/12,
G 01 F 1/42

(21) Numéro de dépôt: **82420055.4**

(22) Date de dépôt: **14.04.82**

(54) **Procédé de réglage du débit du fluide circulant dans une installation de chauffage central, et matériel destiné à sa mise en oeuvre.**

(30) Priorité: **17.04.81 FR 8107958**

(43) Date de publication de la demande:
**27.10.82 Bulletin 82/43**

(45) Mention de la délivrance du brevet:
**06.02.85 Bulletin 85/6**

(84) Etats contractants désignés:
**AT BE CH DE GB IT LI LU NL SE**

(56) Documents cités:
**FR - A - 2 129 768**

**CONTROL AND INSTRUMENTATION, volume 10, no. 2, février 1978, LONDRES (GB) Y. BRAMSON "A fresh look at differential pressure flow measurement", pages 21-23 ASHRAE JOURNAL, volume 10, no. 11, novembre 1968 G.F. CARLSON "Hydronic systems: analysis and evaluation - part II", pages 45-51**

(73) Titulaire: **Ets. A. Desbordes, 56, Rue Masséna,
F-69003 Lyon (FR)**

(72) Inventeur: **Cocherel, Michel, 117, rue Garibaldi,
F-69006 Lyon (FR)**

(74) Mandataire: **Karmin, Roger et al, Cabinet
MONNIER 150, cours Lafayette, F-69003 Lyon (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention se réfère à un procédé de réglage du débit du fluide circulant dans une installation de chauffage central, notamment au niveau des émetteurs de chaleur ou radiateurs.

On sait que dans une installation de chauffage central, on dose le débit du fluide chauffant traversant lesdits radiateurs de manière qu'il soit plus faible dans les éléments chauffants se trouvant plus près de la source de chaleur que dans ceux qui en sont le plus éloignés. Cette opération est appelée dans le langage technique équilibrage des radiateurs. Depuis l'origine du chauffage central, c'est-à-dire il y a plus de quatre-vingts ans, on a essayé de réaliser l'équilibrage en question avec difficulté et succès incertain. On a tout d'abord installé des robinets à pointeaux à double réglage en remplacement des robinets à boisseaux à double réglage, puis les tés et coudes comportant un étrangleur réglable ont petit à petit pris le pas sur les robinets à double réglage. On a aussi utilisé des circulateurs à charge variable pour pallier partiellement les défauts de l'équilibrage.

Pour réaliser un équilibrage correct des radiateurs, il est nécessaire d'opérer des calculs justes et précis de manière à déterminer quels sont les réglages à effectuer afin que tous les radiateurs d'une installation de chauffage central puissent recevoir le fluide chauffant (généralement de l'eau) dans des conditions telles qu'ils soient à même de remplir leur rôle. En fait, il faut au moins que les pertes de charge du circuit en amont du radiateur considéré soient telles qu'aucun radiateur ne soit privilégié, ou sous-alimenté. C'est la raison de la création d'une perte de charge artificielle par les étrangleurs précités. On comprend aisément que cet étranglement est effectué de manière que les pertes de charge artificielles soient les plus importantes pour les radiateurs les plus favorisés (généralement les plus proches de la source de chaleur), afin que les autres soient correctement alimentés.

Le calcul dont on a parlé plus haut consiste donc à déterminer les pertes de charge de toutes les canalisations de l'installation, y compris celles artificiellement établies au moyen des étrangleurs, de manière que tous les radiateurs de l'installation soient alimentés à peu près dans les mêmes conditions.

Comme indiqué précédemment, l'étrangleur se présente généralement sous la forme d'un té ou d'un coude dans lequel est inclus un pointeau destiné à faire varier la section de l'orifice de passage du raccord en question. Les fabricants de robinets, de radiateurs, de coudes, ou tés de réglage, fournissent à l'usage des bureaux d'études des abaques où sont figurées pour chaque modèle de ces organes les pertes de charge en fonction de la position du pointeau destinées à indiquer à l'utilisateur le nombre de tours à impartir au pointeau afin d'obtenir la perte de charge désirée.

On comprend aisément que ces réglages ne sont pas précis en raison du caractère forcément théorique du calcul, des aléas de l'installation et surtout de la difficulté de donner exactement le nombre de tours souhaité aux organes de réglage, d'autant plus que dans certaines conditions un très faible déplacement angulaire du pointeau entraîne une variation relativement importante de la perte de charge.

Un tel système d'équilibrage implique un calcul préalable long, fastidieux et aléatoire. En outre, le contrôle de l'équilibrage ne peut être effectué qu'une fois l'installation terminée et quelquefois même après achèvement des finitions du bâtiment. De toute manière, une fois que le réglage déterminé par le calcul a été effectué, il est nécessaire de le vérifier en constatant les effets sur la température des locaux à chauffer et de l'affiner par des modifications successives, de telle sorte que l'opération considérée est longue et fort coûteuse.

C'est la raison pour laquelle les réglages en question sont rarement bien effectués, de sorte que certains radiateurs ne reçoivent pas un débit d'eau suffisant. Cela se rencontre, en particulier, dans les immeubles où, pour une température donnée de l'eau traversant des radiateurs, on obtient des différences de température de l'ordre de 10° C entre les appartements situés par exemple au rez-de-chaussée et ceux qui se trouvent aux étages supérieurs. Dans ce cas, l'on élève généralement la température de l'eau ou l'on augmente sa vitesse d'émission et c'est alors le contraire qui se produit: pour une température acceptable aux étages supérieurs, les appartements du bas de l'immeuble sont surchauffés. On assiste donc à un gaspillage d'énergie qui vient s'ajouter au coût de l'opération de réglage.

Les perfectionnements qui font l'objet du présent brevet visent à remédier à ces inconvénients et à permettre la mise en œuvre d'un procédé d'équilibrage des radiateurs par réglage du débit qui réponde particulièrement bien aux divers desiderata de la pratique.

Le procédé de réglage suivant l'invention consiste à relever successivement le débit du fluide à tous les points de la tuyauterie de l'installation qui sont voisins des émetteurs en mesurant à la manière en soi connue la pression différentielle de part et d'autre d'un ajutage déterminé disposé dans la tuyauterie à tous les points considérés, et à agir ensuite sur un étrangleur voisin de chaque ajutage jusqu'à ce que la valeur désirée du débit du fluide caloporteur soit obtenue.

Pour la mise en œuvre de ce procédé, on dispose d'un appareil comprenant essentiellement un manomètre différentiel muni de deux sondes dont chacune des extrémités est associée à un robinet comprenant un organe propre à ouvrir et à fermer un système d'obturation en forme de pointeau de chacune de deux prises d'un raccord monté sur une tuyauterie et située de part et d'autre d'une cloison transversale dudit raccord qui est pourvue d'un ajutage, le robinet de chaque sonde étant adaptable de manière étanche sur chaque prise. La manœuvre de l'étrangleur permet de régler le débit du fluide en fonction des informations lues sur le manomètre différentiel. Le raccord pourrait ne pas être une pièce isolée mais être incorporé soit aux organes de raccordement ou de réglage usuels (tés et coudes), soit aux robinets, soit aux radiateurs.

La perte de charge créée par la traversée de l'étranglement réglable du raccord est enregistrée par le manomètre différentiel dont la graduation peut automatiquement transformer la mesure en lecture d'un débit ou d'une quantité de chaleur grâce à un cadran approprié. Ce cadran pourrait d'ailleurs être changé suivant les marques, les caractéristiques et les capacités des radiateurs.

Dans la méthode suivant l'invention, on conserve les calculs précédemment effectués pour les installations usuelles, ceux-ci pouvant cependant être d'un degré de précision moindre du fait que la correction finale est facile et rapide. L'installateur branche son manomètre différentiel successivement sur tous les radiateurs de l'installation à régler, et peut réaliser ce qui ne se passait pas jusqu'à présent: constater instantanément la conséquence de son action de réglage. De plus, cette intervention peut s'effectuer en n'importe quelle saison, les locaux étant occupés ou non. On peut même envisager de ne faire circuler que de l'eau froide, en tenant compte, le cas échéant, en toute rigueur, du changement de ses caractéristiques notamment liées à la diminution de sa densité lorsqu'elle est chauffée. Une fois tous les réglages effectués, on peut les refaire de manière itérative afin de les améliorer.

Le raccord considéré peut comporter un ajutage de diamètre unique réalisé dans des conditions déterminées d'usinage, de longueur de précision et de position, afin qu'on puisse utiliser un modèle standard pour un diamètre nominal de canalisation déterminé, quelle que soit la capacité calorifique des radiateurs vendus dans le commerce. Les conditions d'usinage, de longueur, de précision et de position des prises de pression doivent également être déterminées par le calcul et/ou les essais. Ce raccord serait alors considéré comme raccord étalon qui faciliterait la mise en œuvre du procédé suivant l'invention.

Le raccord considéré pourrait aussi comporter un ajutage variable.

En plus des avantages cités ci-dessus, on peut encore noter que la méthode suivant l'invention permet d'équilibrer une installation pour laquelle on ne souhaite pas de réglage individuel des radiateurs ou lorsqu'il ne peut pas y en avoir comme pour les chauffages de base par le sol ou les murs. Dans le premier cas, on utilise généralement des robinets thermostatiques bloqués à la température désirée, mais cela n'empêche pas que l'ouverture d'une porte ou d'une fenêtre entraîne une modification de la commande de débit, du fait que le thermostat peut être affecté par le courant d'air froid alors qu'on pourrait souhaiter maîtriser l'apport en calories et non seulement la température. Le réglage suivant l'invention évite donc toute déperdition calorifique non souhaitée.

Un autre avantage non négligeable se trouve vraisemblablement sur le plan économique car on pourrait ainsi grâce à l'invention prévoir une répartition sinon parfaite, du moins satisfaisante, et en tous cas très améliorée par rapport à la situation moyenne actuelle des frais de chauffage dans un immeuble, puisque les consommations de fluide chauffant seraient déterminées sans passer par le biais d'un compteur de calories. Des consommations seraient en effet plus équitablement réparties en tenant compte ou non, au gré du constructeur, des besoins calorifiques dépendant eux-mêmes des déperditions.

De manière que les utilisateurs ne modifient pas le réglage déterminé, l'accès aux pointeaux d'étranglement pourrait être rendu inviolable par exemple par soudure d'un bouchon. Et là encore on obtiendrait une économie d'énergie puisque les utilisateurs ne pourraient en aucun cas dépasser l'émission calorifique prévue pour chaque radiateur. Actuellement, cette opération est souhaitée par les professionnels mais pratiquement impossible à réaliser car, n'étant généralement pas confiants dans l'équilibrage qu'ils ont réalisé, ils se réservent la possibilité de contrôler sa validité et d'y remédier par contrôle de la température dans les locaux chauffés après qu'ils aient été meublés, décorés et occupés et où, par conséquent, les interventions dégradantes du type soudure sont inopportunes.

Grâce à l'invention on obtient un équilibrage plus facile, plus rapide et plus précis, le réglage en question pouvant être effectué même en dehors des périodes de chauffage. La mise en œuvre du procédé suivant l'invention permet d'améliorer sensiblement la qualité et la rapidité de chauffage des installations, le confort des utilisateurs, les dépenses d'énergie, le coût et la commodité des installations par diminution du temps à y consacrer.

Auparavant on se posait la question de bien équilibrer le débit des radiateurs, mais on n'avait jamais pensé à mesurer ce débit à leur niveau. D'ailleurs quand bien même cette idée serait venue à l'esprit des techniciens, ils n'auraient pas pu utiliser des manomètres différentiels du commerce du fait de leur encombrement et de leur coût.

L'invention résoud donc un problème latent et ancien par application d'un principe connu, mais dont le résultat est nouveau, tandis que sa mise en œuvre nécessite la création de moyens spécifiques.

La fig. 1 est une vue schématique d'une installation de chauffage central à eau chaude et radiateurs, pourvue des perfectionnements suivant l'invention.

La fig. 2 illustre partiellement en coupe un raccord destiné à la mise en œuvre du procédé suivant l'invention.

Les fig. 3 et 4 sont des vues en bout des clapets utilisés dans le raccord de la fig. 2.

La fig. 5 montre en coupe le dispositif destiné à ouvrir et à refermer chacun des clapets du raccord de la fig. 2.

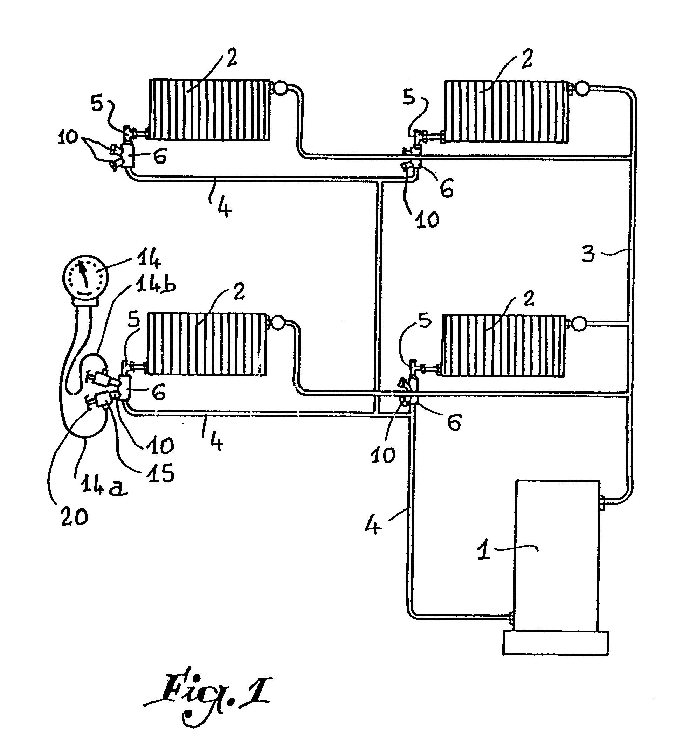

On a illustré en fig. 1 une installation de chauffage central à eau chaude fonctionnant à partir d'une chaudière 1 destinée à alimenter des radiateurs 2 par l'intermédiaire d'une canalisation 3 qui se ramifie en direction de chacun desdits radiateurs. Le retour vers la chaudière s'effectue par l'intermédiaire d'une canalisation 4.

Comme on l'a expliqué plus haut, il est nécessaire de régler le débit du fluide caloporteur au niveau des radiateurs de manière que ceux-ci puissent émettre la quantité de chaleur désirée.

A cet effet et conformément à l'invention, on relève successivement le débit du fluide à la sortie de chaque radiateur 2 et, si la valeur relevée ne correspond pas au débit déterminé auparavant par calcul, on modifie le passage du fluide caloporteur en faisant varier l'étranglement engendré par un coude usuel de réglage référencé 5.

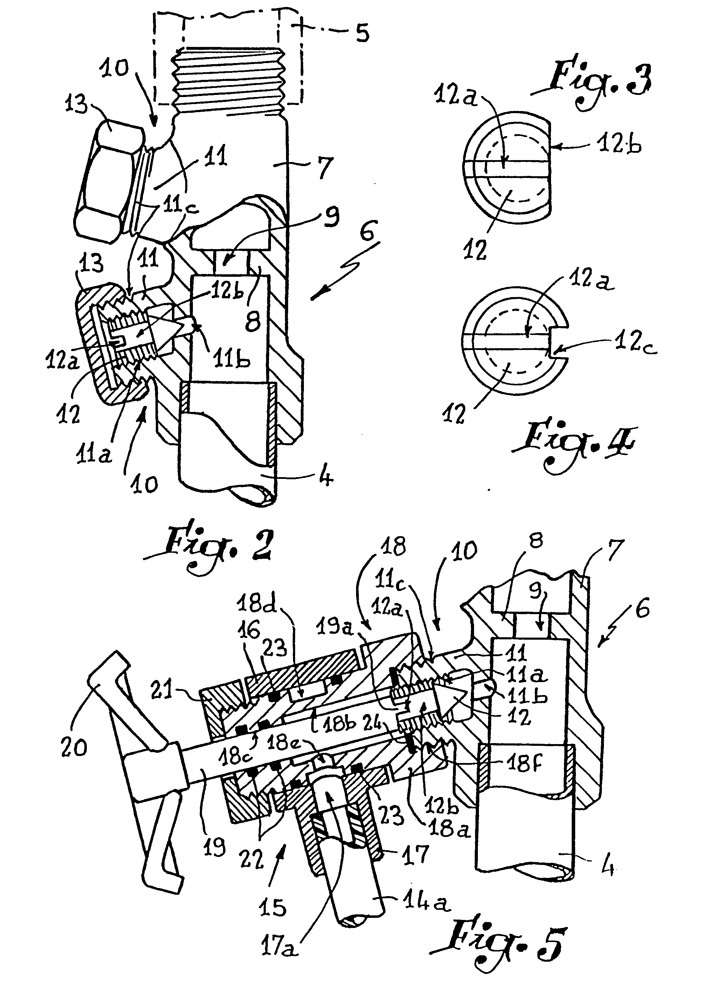

Pour la mise en œuvre de ces mesures, on place sur la tuyauterie 4 (ou 3), au voisinage immédiat du coude de réglage 5, un raccord 6 plus particulièrement illustré en fig. 2. Ce raccord comprend un manchon cylindrique 7 dont l'une des extrémités est vissée dans la sortie du coude 5, tandis que son extrémité opposée est associée de toute manière appropriée à la canalisation 4. L'alésage intérieur du manchon 7 comprend une cloison transversale 8 comportant un ajutage central 9. Le raccord comprend encore deux prises 10 à axe géométrique incliné ou perpendiculaire au manchon 7. Chaque prise 10 est réalisée sous la forme d'un bossage creux 11 dont l'intérieur comporte un taraudage 11a. La partie interne du bossage 11 communique avec l'alésage central du manchon 7 au moyen d'une petite perforation 11b susceptible de constituer siège pour un pointeau 12 qui se visse par rapport au taraudage 11a du bossage 11. On observe que le pointeau est pourvu d'une fente 12a destinée à son actionnement et qu'il comporte en outre un méplat 12b (fig. 3), de manière que lorsqu'il est désolidarisé du siège 11b, il y ait communication entre l'alésage central du manchon 7 et l'intérieur du bossage 11.

Ce dernier comporte également un filetage extérieur 11c sur lequel est vissé un bouchon 13.

On observe que le débouché des petites perforations 11b dans l'alésage central du manchon 7 se trouve de part et d'autre de la cloison transversale 8.

Chaque pointeau 12 pourrait comporter une rainure longitudinale 12c (fig. 4) remplaçant le méplat 12b mais dont la fonction serait identique.

On a illustré en fig. 5 la manière dont sont actionnés chacun des pointeaux du raccord 6, de manière que les deux sondes 14a, 14b d'un manomètre différentiel 14 puissent venir mesurer la pression du liquide caloporteur de part et d'autre de la cloison transversale 8 du raccord 6.

L'extrémité de la sonde 14a, de même d'ailleurs que celle de la sonde 14b, est pourvue d'un embout 15 affectant la forme d'une bague annulaire 16 comportant un mamelon radial 17 dans lequel est engagée de manière étanche l'extrémité considérée de la sonde. Dans l'alésage central de la bague 16 est engagé le corps 18 d'un robinet traversé par une tige 19 associée à un volant de manœuvre 20. Un écrou 21, vissé sur l'extrémité libre du corps 18, permet de maintenir en place l'embout 15 contre la tête 18a du corps 18. Celui-ci comporte un alésage central étagé 18b, 18c, ce dernier étant traversé de manière étanche par la tige 19 grâce à la présence de joints 22. Le corps 18 comporte une gorge périphérique 18d dans laquelle débouche le trou central 17a du mamelon 17, ladite gorge communiquant avec la partie 18b de l'alésage du corps par une ouverture 18e. L'étanchéité au niveau de la bague 16 est réalisée au moyen de deux joints 23 disposés dans le corps 18 de part et d'autre de la gorge 18d.

Pour mettre en œuvre le procédé suivant l'invention, après que chaque radiateur a été pourvu d'un raccord 6, on mesure comme indiqué ci-après le débit du fluide caloporteur au niveau de ce raccord. On dévisse tout d'abord les deux bouchons 13 recouvrant de manière étanche l'extrémité libre de chaque bossage 11, puis l'extrémité taraudée 18f du corps 18a opposée au bouchon 21 est vissée sur le filetage 11c de chaque bossage 11 (fig. 5). L'étanchéité est réalisée à ce niveau grâce à un joint 24 demeurant en permanence au fond du taraudage 18f.

A ce moment on peut déplacer axialement la tige 19 de manière que son extrémité amincie 19a vienne s'engager dans la fente 12a du pointeau 12, de telle sorte qu'en tournant dans le sens approprié le volant 20 on provoque le dévissage de ce pointeau. Le liquide caloporteur traverse alors la petite perforation 11b, puis s'écoule le long du pointeau grâce à la présence de son méplat ou de sa rainure, pour arriver dans l'espace situé entre la partie 18b de l'alésage du corps et la tige 19 d'où il passe dans la sonde 14a en traversant successivement la perforation 18e et le trou 17a. Il en va de même pour le second bossage 11, si bien qu'on peut alors lire sur le manomètre différentiel 14 le débit traversant le raccord 6. Si ce dernier ne correspond pas à la valeur déterminée, on agit sur l'étranglement du coude 5 pour obtenir cette valeur sur le cadran du manomètre.

On procède de proche en proche, c'est-à-dire de radiateur en radiateur jusqu'à ce que toute l'installation soit parfaitement équilibrée.

Il va de soi que la cloison transversale 8 du manchon 7 du raccord 9 pourrait être démontable de manière qu'on puisse faire varier la section de l'ajutage 9. De plus pour faciliter les choses on pourrait graduer directement le cadran du manomètre en unités calorifiques. De même le raccord 6 pourrait être placé en variante sur la canalisation 3. Il pourrait aussi être intégré au coude 5, ou au robinet du radiateur considéré.

## Revendications

1. Procédé de réglage du débit d'un fluide caloporteur circulant dans une installation de chauffage central notamment au niveau des émetteurs de chaleur (2) en vue d'équilibrer leur émission, caractérisé en ce qu'il consiste à relever successivement le débit du fluide à tous les points de la tuyauterie (4) de l'installation qui sont voisins des émetteurs (2) en mesurant à la manière en soi connue la pression différentielle de part et d'autre d'un ajutage déterminé (9) disposé dans la tuyauterie à tous les points considérés, et à agir ensuite sur un étrangleur (5) voisin de chaque ajutage (9) jusqu'à ce que la valeur désirée du débit du fluide caloporteur soit obtenue.

2. Appareil destiné à la mise en œuvre du procédé suivant la revendication 1, du genre comprenant un manomètre différentiel (14) muni de deux sondes (14a, 14b), caractérisé en ce que chacune des extrémités de ces sondes est associée à un robinet comprenant un organe (19, 20) propre à ouvrir et à fermer un système d'obturation en forme de pointeau (12) de chacune de deux prises (10, 11) d'un raccord (6) monté sur une tuyauterie (4) et situées de part et d'autre d'une cloison transversale (8) dudit raccord (6) qui est pourvue d'un ajutage (9), le robinet de chaque sonde étant adaptable de manière étanche sur chaque prise (10, 11).

3. Appareil suivant la revendication 2, caractérisé en ce que l'ajutage (9) de la cloison transversale (8) du raccord (6) est de section variable.

4. Appareil suivant la revendication 2, caractérisé en ce que le cadran du manomètre différentiel (14) est directement gradué en unités calorifiques.

## Patentansprüche

1. Verfahren zur Regelung der Durchflussmenge der in einer Zentralheizungsanlage fliessenden Heizflüssigkeit, insbesondere in der Ebene der Heizkörper (2), um ihre Wärmeabgabe einzustellen, dadurch gekennzeichnet, dass nacheinander an allen in der Nähe der Heizkörper (2) liegenden Punkten der Leitung (4) die Durchflussmenge der Heizflüssigkeit derart bestimmt wird, dass in an sich bekannter Weise jeweils der Differentialdruck beiderseits einer in der Leitung an den betrachteten Punkten angeordneten, festgelegten Düse (9) gemessen wird und dass anschliessend auf eine in der Nähe jeder Düse (9) vorgesehene Drosselstelle (5) eingewirkt wird, bis der gewünschte Wert der Durchflussmenge der Heizflüssigkeit erreicht wird.

2. Vorrichtung zur Durchführung des Verfahrens nach Anspruch 1 mit einem mit zwei Sonden (14a, 14b) versehenen Diffenrentialmanometer (14), dadurch gekennzeichnet, dass das Ende jeder Sonde jeweils einem Hahn zugeordnet ist, der mit einem Betätigungsorgan (19, 20) zum Öffnen und Schliessen einer Absperreinrichtung (12) in Form eines Nadelventils in jedem der zwei Anschlüsse (10, 11) eines in der Rohrleitung (4) angeordneten Verbindungsstückes (6) versehen ist, wobei die Anschlüsse (10, 11) beiderseits einer eine Düse (9) aufweisenden Querwand (8) in dem Verbindungsstück angeordnet sind und wobei der Hahn für jede Sonde dichtend auf den jeweiligen Anschluss (10, 11) aufsetzbar ist.

3. Vorrichtung nach Anspruch 2, dadurch gekennzeichnet, dass die Düse (9) in der Querwand (8) des Verbindungsstückes (6) einen veränderbaren Querschnitt aufweist.

4. Vorrichtung nach Anspruch 2, dadurch gekennzeichnet, dass die Anzeigeskala des Differentialmanometers (14) direkt in Wärmeeinheiten geeicht ist.

## Claims

1. A method of controlling the flow of a fluid circulating in a central heating system, particularly at the radiators (2) in order to balance their radiation, characterised in that it consists in successively setting up or determining the flow of fluid at all points of the pipework (4) in the system adjacent to the radiators (2) by measuring in a manner known *per se* the pressure differential between one region and another of a selected nozzle (9) disposed in the pipework at all of said points, and then actuating a throttle (5) adjacent each nozzle (9) until the desired value of fluid flow is obtained.

2. Apparatus for carrying out the method according to claim 1, of the kind comprising a differential manometer (14) provided with two connectors or leads (14a, 14b), characterised in that each end of each connector or lead is associated with a cock comprising a member (19, 20) adapted to open and close an obturating device in the form of a needle valve (12) of each of two branches or tappings (10, 11) of an adaptor (6) mounted in pipework (4), the branches or tappings (10, 11) being located on opposite sides of a transverse partition (8), which is provided with a nozzle (9), of the adaptor (6), the cock of each connector or lead being connected in a fluid-tight manner to each branch or tapping (10, 11).

3. Apparatus according to claim 2, characterised in that the nozzle (9) of the transverse partition (8) of the adaptor is of variable section.

4. Apparatus according to claim 2, characterised in that the scale of the differential manometer (14) is calibrated in calorific units.

Fig. 1

Fig. 2

Fig. 3

Fig. 4

Fig. 5